# EUROPÄISCHE PATENTSCHRIFT

(11) **EP 2 836 854 B1**
(45) Veröffentlichungstag und Bekanntmachung des Hinweises auf die Patenterteilung: **02.08.2017**
(21) Anmeldenummer: 13729661.2
(22) Anmeldetag: 10.06.2013
(51) Int. Cl.: G01S 17/42

(54) **POSITIONSBESTIMMUNG VON RADFAHRZEUGEN MITTELS LASERSCANNER**
POSITION DETERMINATION OF WHEELED VEHICLES BY MEANS OF LASER SCANNERS
DÉTERMINATION DE LA POSITION DE VÉHICULES ROULANTS AU MOYEN D'UN SCANNER À LASER

(30) Priorität: 11.06.2012 DE 102012209724
(43) Veröffentlichungstag der Anmeldung: 18.02.2015
(73) Patentinhaber: Siemens Aktiengesellschaft, 80333 München (DE)
(72) Erfinder: SOIKA, Martin, 84028 Landshut (DE)
(86) Internationale Anmeldenummer: PCT/EP2013/061925
(87) Internationale Veröffentlichungsnummer: WO 2013/186174

(56) Entgegenhaltungen:
- EP-A1- 1 531 343
- WO-A1-96/20465
- US-A1- 2011 254 503
- ROLAND STAHN ET AL: "Laser Scanner-Based Navigation for Commercial Vehicles", INTELLIGENT VEHICLES SYMPOSIUM, 2007 IEEE, IEEE, PI, 1. Juni 2007 (2007-06-01), Seiten 969-974, XP031127072, ISBN: 978-1-4244-1067-5

## Beschreibung

Die Erfindung betrifft eine Vorrichtung und ein Verfahren zur Positionsbestimmung von Radfahrzeugen, insbesondere Kraftwagen wie beispielsweise Personenkraftwagen und Lastkraftwagen.

Derartige Vorrichtungen und Verfahren können beispielsweise für eine Personenkraftwagen- (PKW-) Verladung mittels eines fahrerlosen Transportsystems, für die Einweisung von Elektro- und Hybridfahrzeugen auf Parkplätze mit induktiver Ladefunktionalität, für Waschstraßen oder für eine Lastkraftwagen-Positionierung unter Verladekränen in Containerhöfen verwendet werden.

Bei einer PKW-Verladung mittels eines fahrerlosen Transportsystems (FTS) und ein entsprechendes Parkhaussystem sollen die einzulagernden PKW mithilfe eines fahrerlosen Transportsystems angehoben werden. Hierfür stellt ein Fahrer den PKW in einem, einer Garage ähnlichen Raum mit ebenem Boden innerhalb eines markierten Bereiches ab. Nachdem der Fahrer diesen Raum verlassen und über ein Bedienterminal die Einlagerung veranlasst hat, wird der PKW von dem FTS aufgenommen und in den Stauraum transportiert. Es sind keine herkömmlichen Lösungen bekannt, damit das Fahrzeug sicher und beschädigungsfrei an den Rädern durch das FTS aufgenommen werden kann. Herkömmlicherweise können die Positionen der Räder nicht hinreichend genau bestimmt werden.

Bei einer Einweisung von Elektro- und Hybridfahrzeugen auf Parkplätzen mit induktiver Ladefunktionalität sind Batterieladekonzepte für elektrisch betriebene Kraftfahrzeuge erforderlich, die induktive, berührungslose und damit komfortable und damit vom Benutzer akzeptierte Lösungen vorsehen. Für derartige Lösungen muss die im Fahrzeugboden verbaute, Energie aufnehmende Sekundärspule während des Parkvorgangs möglichst genau über der Energie abgebenden, im Boden eingebauten Primärspule positioniert werden, damit die während des Ladevorgangs auftretenden Energieverluste minimiert werden können. Damit dies in hinreichender Genauigkeit erreicht werden kann, muss der Fahrer entweder durch entsprechende Bewegungsanweisungen, wie es beispielsweise Fahren nach links, rechts, vorwärts oder rückwärts sein können, oder durch einen automatischen Parkassistenten unterstützt werden. In beiden Anwendungsfällen muss die Position des Fahrzeuges relativ zur anfahrenden Zielposition bekannt sein und daher sensoriell erfasst werden. Eine herkömmliche Positionsbestimmung erfolgt mittels einer unter dem Radfahrzeug montierten und auf den Boden gerichteten Kamera, die eine auf den Boden aufgebrachte Markierung, wie dies beispielsweise ein Fadenkreuz sein kann, erfasst und daraus die Relativposition bestimmt. Eine weitere herkömmliche Positionsbestimmung erfolgt über eine Auswertung zusätzlich im Boden und Fahrzeug angebrachte Induktionsspulen in geeigneter Anordnung. Eine weitere herkömmliche Lösung umfasst eine Verwendung hochauflösender Ultraschallsensoren.

Bei einer Reinigung eines Radfahrzeuges in einer Waschstraße werden die Radfahrzeuge mittels einer Fördereinheit vorwärts bewegt und dadurch der Waschvorgang koordiniert. Zu Beginn des Waschvorgangs muss der Fahrer auf die Fördertechnik mit geringen Toleranzen auffahren. Herkömmlicherweise wird für die Einfahrt in eine Waschstraße der Fahrer von einem Einweiser oder über einen mechanischen Einfahrrichter auf die Fördertechnik gelotst.

Herkömmlicherweise erfolgt bei einer Anwendung für LKW-Positionierungen unter einem Verladekran in Containerhäfen eine Vermessung einer LKW-Position von oben mittels Laserscanner, die an den unteren Portalträgern beweglich befestigt sind. Herkömmlicherweise wird der beladene Zustand der Container selbst erfasst und über eine Ampel positioniert. Im unbeladenen Zustand wird über geeignete Fahrzeugmodelle, die eine Dimension und Position von Fahrerhaus und Rahmenstruktur umfassen, auf die Ladefläche geschlossen und diese dann positioniert. Für die Verladung von Containern von Schiffen auf Lastkraftwagen müssen letztere so unter dem Verladekran positioniert werden, dass dieser ohne Bewegung entlang einer Kaimauer den Container auf dem LKW absetzen kann beziehungsweise von diesem aufnehmen kann. Bei bekannter Fahrzeuggeometrie kann aus der sensoriell erfassbaren Position der Räder auf die Position der Ladefläche geschlossen werden. Über dessen Position können zusammen mit der anzufahrenden Zielposition Empfehlungen an den Fahrer erzeugt oder der LKW automatisch an die Zielposition geführt werden.

In Verbindung mit dem Siemens Innovation Day 2011 sind Konzepte zum induktiven Laden von Elektroautos vorgestellt worden.

Die DE 10 2010 046 586 A1 offenbart eine Einrichtung zur Erfassung eines Verkehrsstaus auf insbesondere mehrspurigen Verkehrswegen, umfassend einen an einem Rand des Verkehrsweges angebrachten winkelauflösenden Bewegungssensor.

Die WO 96/20465 offenbart ein System zur Überwachung einer Zone in der sich vorrangig Flugzeuge bewegen, wobei eine Abtasteinrichtung, insbesondere des Laserradartyps, Informationen einem automatischen Steuerungs- oder Andocksystem zuführt.

Die US 2011/0254503 A1 offenbart ein einstellbares Drahtlos-Leistungsversorgungs-Antennensystem für Fahrzeuge.

"Laser Scanner-Based Navigation for Commercial Vehicles" von Toland Stahn, Gerd Heiserich und Adreas Stopp, DaimlerChrysler AG, Technische Universität Berlin in Proceedings oft he 2007 IEEE Intelligent Vehicles Symposium Istanbul, Türkei, Juni 13-15, 2007 offenbart ein neuartiges Navigationssystem das Laserabstandssensoren verwendet.

Es ist Aufgabe der vorliegenden Erfindung eine Vorrichtung und ein Verfahren zur Positionsbestimmung von Radfahrzeugen derart bereitzustellen, dass diese einfach, robust, hinreichend genau und fahrzeugtypunabhängig ausgeführt wird. Eine derartige Positionsbestimmung soll vielseitig anwendbar sein.

Die Aufgabe wird durch eine Vorrichtung gemäß dem Hauptanspruch und einem Verfahren gemäß dem Nebenanspruch gelöst.

Gemäß einem ersten Aspekt erfolgt eine Bereitstellung einer Vorrichtung zur Positionsbestimmung von Radfahrzeugen, die dadurch gekennzeichnet ist, dass eine Laserabtasteinrichtung in Relation zu einem Raum positioniert ist, in den mindestens ein Radfahrzeug eingebracht wird, wobei die Laserabtasteinrichtung zweidimensional entlang einer zu einer ebenen Bodenfläche des Raums parallelen Abtastebene in einer Höhe zwischen der Bodenfläche des Raums und einer jeweiligen Bodenfläche eines jeweiligen Radfahrzeuges mindestens ein Rad des jeweiligen Radfahrzeuges in einem Abtastbild erfasst und die Genauigkeit der Positionsbestimmung proportional zur Anzahl der erfassten Räder ist, wobei eine Rechnereinrichtung mittels des Abtastbildes eine jeweilige Position des mindestens einen Rades in der Abtastebene berechnet, dadurch gekennzeichnet, dass die Rechnereinrichtung mittels Filtern mehrerer Abtastbilder die Genauigkeit von jeweiligen Positionsberechnungen erhöht.

Gemäß einem zweiten Aspekt wird ein Verfahren zur Positionsbestimmung von Radfahrzeugen beansprucht, wobei eine Laserabtasteinrichtung in Relation zu einem Raum positioniert wird, in dem mindestens ein Radfahrzeug eingebracht wurde, wobei die Laserabtasteinrichtung zweidimensional entlang einer zu einer ebenen Bodenfläche des Raums parallelen Abtastebene in einer Höhe zwischen der Bodenfläche des Raums und einer jeweiligen Bodenfläche eines jeweiligen Radfahrzeuges mindestens ein Rad des jeweiligen Radfahrzeuges in einem Abtastbild erfasst und die Genauigkeit der Positionsbestimmung mit der Anzahl der erfassten Räder steigt, wobei eine Rechnereinrichtung mittels des Abtastbildes eine jeweilige Position des mindestens einen Rades in der Abtastebene berechnet, dadurch gekennzeichnet, dass die Rechnereinrichtung mittels Filtern mehrerer Abtastbilder die Genauigkeit von jeweiligen Positionsberechnungen erhöht.

Erfindungsgemäß werden Laserscanner zur Positionsbestimmung von Rädern an Radfahrzeugen in Verbindung mit einer gewählten Betriebsposition derart verwendet, dass sich einfach strukturierte zweidimensionale Sensorbilder ergeben, die mittels einfacher Verfahren eine robuste Positionsbestimmung bereitstellt. Erfindungsgemäß werden genau jene Merkmale sensoriell erfasst, die bei jeweiligen Radfahrzeugen immer gegeben sind. Deshalb ist neben der Sensorhardware keinerlei zusätzliche Infrastruktur erforderlich.

Mittels Beobachtung mehrerer aufeinanderfolgenden Messungen kann unter Verwendung geeigneter Filtertechniken, wie es beispielsweise ein Kalman-Filter ist, die erreichte Genauigkeit wirksam verbessert werden.

Weitere vorteilhafte Ausführungsbeispiele werden in Verbindung mit den Unteransprüchen beansprucht.

Gemäß einer vorteilhaften Ausgestaltung kann die Laserabtasteinrichtung mindestens einen Sensor aufweisen, der in der Abtastebene mindestens ein Rad unter einem jeweiligen Blickwinkel für das Abtastbild erfassen kann.

Gemäß einer weiteren vorteilhaften Ausgestaltung kann der Sensor das mindestens eine Rad in dem Abtastbild als zwei zueinander rechtwinklig angeordnete Strecken erfassen.

Gemäß einer weiteren vorteilhaften Ausgestaltung kann die Rechnereinrichtung mittels zusätzlicher Daten eines Modells des jeweiligen Radfahrzeuges die jeweilige Position des mindestens einen Rades und/oder die Position einer Ladefläche des jeweiligen Radfahrzeuges berechnen. Aus den mittels der Laserabtastung gewonnenen Daten können über einfache Segmentierungsalgorithmen unter Verwendung von Modellwissen derart, dass Reifen in einem erfassten Schnitt aus dem jeweils gültigen Blickwinkel zwei zueinander rechtwinklig stehenden Strecken entsprechen, die Positionen der Räder extrahiert werden.

Gemäß einer weiteren vorteilhaften Ausgestaltung kann die Rechnereinrichtung mittels zusätzlicher allgemeiner Symmetriebedingungen von Radfahrzeugen, die jeweilige Position des jeweiligen Rades berechnen. Besonders vorteilhaft ist die Tatsache, dass entstehende Verdeckungen einzelner Räder oder Radflanken mittels Symmetriebedingungen kompensiert werden können. Derartige Symmetriebedingungen sind Merkmale, wie beispielweise, dass Radfahrzeuge üblicherweise vier Räder aufweisen, von denen jeweils zwei auf einer Achse fixiert sind, oder dass Räder der gleichen Seite aber unterschiedlicher Achsen annähernd hintereinander positioniert sind. Zusätzlich können Sonderfälle wie LKW mit mehreren Achsen gehandhabt werden.

Gemäß einer weiteren vorteilhaften Ausgestaltung kann die Rechnereinrichtung mittels zusätzlichen von Rädern unabhängigen Messpunkten des Abtastbildes eine jeweilige Position der Laserabtasteinrichtung zu einem Referenzkoordinatensystem berechnen. Mittels derartiger Messpunkte, die nicht den Rädern zugeordnet werden können, kann die Position eines Laserscanners gegenüber einem ortsfesten Referenzkoordinatensystem bestimmt werden.

Gemäß einer weiteren vorteilhaften Ausgestaltung kann eine Positioniereinrichtung mittels der erfassten Positionen jeweiliger Räder des Radfahrzeuges das Radfahrzeug voll automatisch oder eine Bedienperson unterstützend in eine Betriebsposition in dem Raum bringen.

Gemäß einer weiteren vorteilhaften Ausgestaltung kann in der Betriebsposition sich eine Sekundärspule des Radfahrzeuges großflächig über einer Primärspule im Boden des Raums erstrecken. Auf diese Weise wird besonders vorteilhaft eine Einweisung von Elektro- und Hybridradfahrzeugen auf Parkplätzen mit induktiver Ladefunktionalität ausgeführt. Besonders vorteilhaft ist keine teure und aufwendige Zusatzhardware am Radfahrzeug erforderlich, die kompatibel zu verbauten Infrastrukturen sein muss. Auf diese Weise ist im Vorlauf kein erheblicher Abstimmungsaufwand, insbesondere hinsichtlich Normierungen, erforderlich. Auf diese Weise ist eine erfindungsgemäße Lösung ebenso länderübergreifend ausführbar. Ein weiterer Vorteil ist, dass durch optimierte Sensoren und einer geeigneten Parkplatzorganisation mittels eines Scanners bereits mehrere Parkplätze gleichzeitig erfasst werden können. Weiterhin kann besonders vorteilhaft mittels der bereits grundsätzlich erforderlichen Kommunikation zwischen Ladestation und Radfahrzeug ebenso die Montageposition der Sekundärspule auf dem Radfahrzeug mitgeteilt werden und dies entsprechend bei einer Anfahrt des Radfahrzeuges berücksichtigt werden. Es ist nicht erforderlich, dass alle Radfahrzeuge deren Sekundärspulen an einer einheitlichen Position montiert haben müssen. Viel mehr ist ein erfindungsgemäßes System geeignet Montagevarianzen unterschiedlicher Fahrzeugtypen in gewissen Grenzen zu kompensieren.

Gemäß einer weiteren vorteilhaften Ausgestaltung kann sich in der Betriebsposition eine Ladefläche des Radfahrzeuges unterhalb einer Hebeeinrichtung für Transportgüter erstrecken. Es ist eine einfache LKW-Positionierung unter Ladekränen in Containerhäfen ausführbar. Vorteilhaft entfallen herkömmlich notwendige Schwenkplattformen für Laserscanner. Daraus ergibt sich ein deutlicher Kostenvorteil. Vorteilhaft werden herkömmliche aufwendige dreidimensionale LKW-Modelle dahingehend vereinfacht, dass lediglich die Abstände der Achsen und die relative Position der Ladefläche beziehungsweise der Ladeflächen modelliert werden muss. Insbesondere für eine Inbetriebnahme bedeutet dies bei Erweiterungen des Systems um weitere LKW-Typen wirksame Vorteile. Vorteilhaft vereinfacht sich in ähnlichem Maße ebenso eine Kalibrierung des Systems, da die Scanner lediglich eine Fläche beobachten und mit dem gegenüberliegenden Fuß der Hebeeinrichtung eine definierte Struktur zur Verfügung steht. Zwar mögen die verbauten Scanner einer höheren Verschmutzungsbelastung ausgesetzt sein, doch ist infolge deren Montageorte knapp über dem Boden des Raumes, das Reinigen im Vergleich zu bisherigen Lösungen um ein Vielfaches vereinfacht.

Gemäß einer weiteren vorteilhaften Ausgestaltung kann in der Betriebsposition eine Transporteinrichtung das Radfahrzeug aufnehmen. Dies ist besonders vorteilhaft bei Verwendung für fahrerlose Transportsysteme. Vorteilhaft bestehen keine störenden Erhebungen und Rinnen des seitens Fahrer und Mitfahrer genutzten Bereichs zum Aussteigen und Entladen des jeweiligen Radfahrzeuges.

Gemäß einer weiteren vorteilhaften Ausgestaltung kann eine Positioniereinrichtung mittels der erfassten Position aller Räder einer Vorderachse des Radfahrzeuges das Radfahrzeug voll automatisch oder eine Bedienperson unterstützend in eine Betriebsposition in dem Raum bringen.

Gemäß einer weiteren vorteilhaften Ausgestaltung kann in der Betriebsposition das Radfahrzeug mit einer Fördereinrichtung einer Waschstraße gekoppelt sein. Vorteilhaft kann bei Verwendung in einer Waschstraße eine fahrzeugunabhängige Lösung realisiert werden, da das für die Positionierungsaufgabe wesentliche Bauteil Rad direkt vermessen und dessen Position mit der Zielposition in Bezug gebracht werden kann.

Gemäß einer weiteren vorteilhaften Ausgestaltung kann eine Positioniereinrichtung mittels der erfassten Positionen aller Räder des in dem Raum abgestellten Radfahrzeuges eine Transporteinrichtung vollautomatisch oder eine Bedienperson unterstützend in eine Transportposition relativ zum Radfahrzeug in dem Raum bewegt werden.

Gemäß einer weiteren vorteilhaften Ausgestaltung kann die Laserabtasteinrichtung, insbesondere mit lediglich einem Laserscanner, alle Räder des jeweiligen Radfahrzeuges erfassen.

Die Erfindung wird anhand von Ausführungsbeispielen in Verbindung mit den Figuren näher beschrieben. Es zeigen:
- Figur 1: ein Ausführungsbeispiel eines herkömmlichen Laserscanners;
- Figur 2: Ausführungsbeispiele von Sensorpositionen;
- Figur 3: ein Ausführungsbeispiel für einen Laserscan;
- Figur 4: ein erstes Ausführungsbeispiel einer Verwendung;
- Figur 5: ein zweites Ausführungsbeispiel einer Verwendung;
- Figur 6: ein Ausführungsbeispiel eines erfindungsgemäßen Verfahrens.

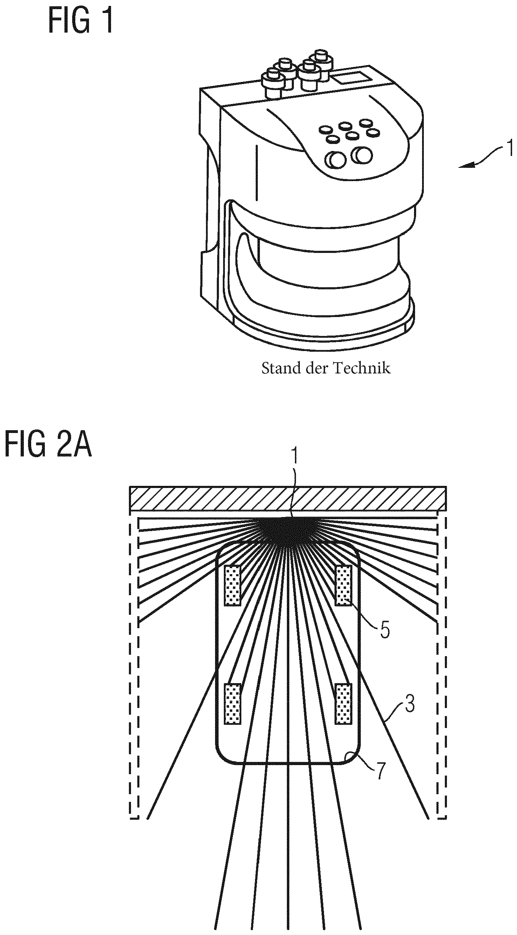

Figur 1 zeigt ein Ausführungsbeispiel eines herkömmlichen Laserscanners. Der dargestellte Laserscanner kann beispielsweise ein mit der Bezeichnung "Sick LMS511" gekennzeichneter Laserscanner sein. Es können herkömmliche Laserscanner verwendet werden. Besonders vorteilhaft ist die Verwendung eines robusten industrietauglichen Laserscanners oder Sensors, der infolge seiner Laserklasse 1 uneingeschränkt in Bereichen mit Personenverkehr eingesetzt werden kann.

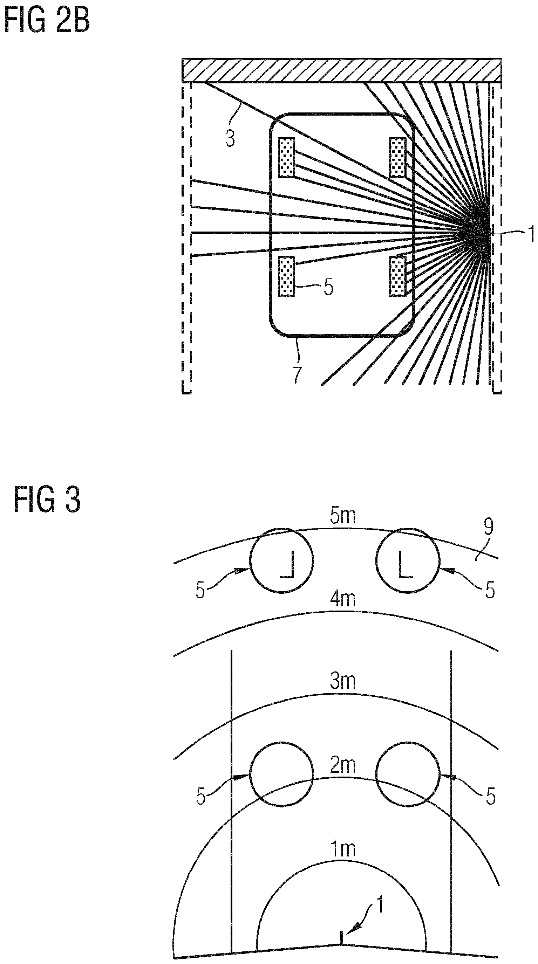

Figur 2 zeigt Ausführungsbeispiele von Sensorpositionen in einem jeweiligen Betriebsraum. Die obere Darstellung zeigt eine Sensorposition derart, dass ein Laserscanner oder ein Sensor ein jeweiliges Radfahrzeug von vorne erfasst. Entsprechend ist der Sensor mittig an einer Stirnseite des Betriebsraumes positioniert. Von dem Laserscanner beziehungsweise dem Sensor 1 ausgehende Laserstrahlen 3 können entsprechend ein jeweiliges Rad 5 eines Radfahrzeuges 7 erfassen. Die untere Darstellung zeigt einen Sensor 1, der von der Seite jeweilige Räder 5 eines Radfahrzeuges 7 erfasst. Gemäß Figur 2 wird jeweils ein Laserscanner 1 derart positioniert, dass dessen Scan-Ebene in einem Abstand beispielsweise von 5 - 15 cm parallel zum Boden eines Betriebsraumes verläuft, sodass in dem relevanten Betriebsraum von den relevanten Radfahrzeugen 7 lediglich die Räder 5 im Sensorbild sichtbar sind. Die Anordnungen gemäß Figur 2 können beispielsweise für eine Radfahrzeug-Verladung mittels eines fahrerlosen Transportsystems verwendet werden. Ebenso kann eine Realisierung gemäß der oberen Darstellung in Figur 2 für eine Waschstraße verwendet werden. Mit dem erfindungsgemäßen Ansatz können die Positionen der Vorderräder erfasst werden, sodass daraus zielführende Lenkempfehlungen abgeleitet und beispielsweise dem Fahrer im Sichtbereich dargestellt werden. Beispielsweise kann eine Anordnung gemäß Figur 2b für eine LKW-Positionierung unter Verladekränen in Containerhäfen verwendet werden.

Figur 3 zeigt ein Abtastbild einer Laserabtastung beziehungsweise eines Laserscans mittels einer Anordnung gemäß Figur 2a, wobei sich beispielsweise ein Radfahrzeug in einer Garage befindet. Das Abtastbild 9 stellt jeweilige Räder 5 in einer Abtastebene als zwei zueinander rechtwinklig stehenden Strecken dar.

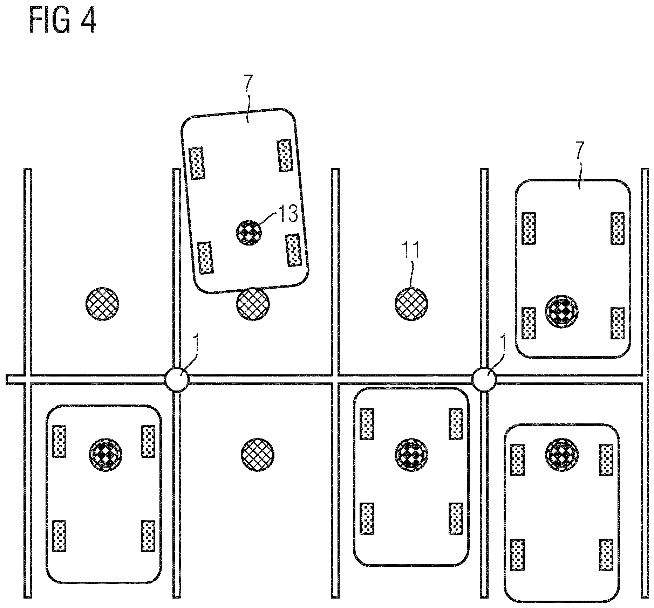

Figur 4 zeigt ein erstes Ausführungsbeispiel einer Verwendung. Eine Positionsbestimmung von Radfahrzeugen wird hier für eine Einweisung von Elektro- und Hybridradfahrzeugen auf Parkplätzen mit einer induktiven Ladefunktionalität angewendet. Bezugszeichen 11 kennzeichnet eine im Boden eines Betriebsraumes positionierte Primärspule. Bezugszeichen 13 bezeichnet eine im Radfahrzeug positionierte Sekundärspule 13 zur Übertragung von elektromagnetischer Energie zur Aufladung von Batterien in dem jeweiligen Radfahrzeug. Entsprechend der Ausführungsform gemäß Figur 4 wurde ein Sensor 1 beziehungsweise Laserscanner und eine Parkplatzorganisation derart optimiert, dass ein jeweiliger Scanner 1 mehrere Parkplätze gleichzeitig erfasst. Gemäß Figur 4 erfasst ein Sensor 1 vier an ihm angrenzende Parkplätze. Figur 4 zeigt eine Anordnung von Laserscannern 1 auf einem Parkplatz mit induktiver Batterieladefunktionalität.

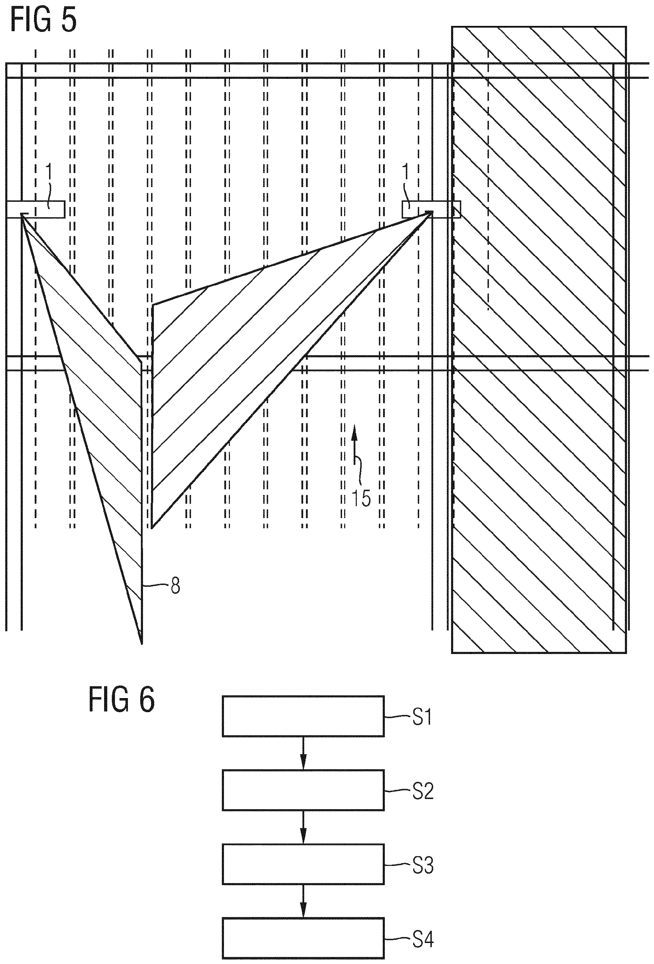

Figur 5 zeigt ein zweites Ausführungsbeispiel einer Verwendung. Laserscanner 1 sind seitlich im Betriebsraum positioniert, wie dies gemäß Figur 2b dargstellt worden ist. Gemäß Figur 5 sind Laserscanner 1 jeweils auf einem land- oder wasserseitigen Kranfuß montiert. Bezugszeichen 9 kennzeichnet Abtastebenen. Ein Pfeil 15 zeigt eine Richtung in die die LKWs bewegt und für ein Be- und Entladen positioniert werden.

Figur 6 zeigt ein Ausführungsbeispiel eines Verfahren zur Positionsbestimmung von Radfahrzeugen, wobei in einem ersten Schritt S1 eine Laserabtasteinrichtung in Relation zu einem Betriebsraum positioniert wurde, in dem in einem zweiten Schritt S2 mindestens ein Radfahrzeug eingebracht wird, wobei mit einem dritten Schritt S3 die Laserabtasteinrichtung zweidimensional entlang einer zu einer ebenen Bodenfläche des Betriebsraums parallelen Abtastebene (8) in einer Höhe zwischen der Bodenfläche des Raums und einer jeweiligen Bodenfläche eines jeweiligen Radfahrzeuges mindestens ein Rad (5) des jeweiligen Radfahrzeuges in einem Abtastbild (9) erfasst und in einem vierten Schritt S4 eine Rechnereinrichtung die Position des Radfahrzeuges mit zur Anzahl der erfassten Räder zunehmender Genauigkeit berechnet.

Es wird eine Vorrichtung und ein Verfahren zur Positionsbestimmung von Radfahrzeugen vorgeschlagen, die eine Laserabtasteinrichtung derart verwendet, dass in einer Abtastebene möglichst viele Räder eines jeweiligen Radfahrzeuges in einem zweidimensionalen Abtastbild erfasst werden. Eine Positionsbestimmung ist auf diese Weise besonders einfach, robust und zuverlässig. Derartige Systeme eignen sich beispielsweise für fahrerlose Transportsysteme, Parkplätze mit induktiver Ladefunktionalität, Waschstraßen oder Verladekränen in Containerhäfen.

## Patentansprüche

1. Vorrichtung zur Positionsbestimmung von Radfahrzeugen (7), wobei eine Laserabtasteinrichtung in Relation zu einem Betriebsraum positioniert ist, in dem mindestens ein Radfahrzeug eingebracht wird, wobei die Laserabtasteinrichtung zweidimensional entlang einer zu einer ebenen Bodenfläche des Betriebsraums parallelen Abtastebene (8) in einer Höhe zwischen der Bodenfläche des Raums und einer jeweiligen Bodenfläche eines jeweiligen Radfahrzeuges mindestens ein Rad (5) des jeweiligen Radfahrzeuges in einem Abtastbild (9) erfasst und die Genauigkeit der Positionsbestimmung mit der Anzahl der erfassten Räder zunimmt, wobei eine Rechnereinrichtung mittels des Abtastbildes eine jeweilige Position des mindestens einen Rades in der Abtastebene berechnet, **dadurch gekennzeichnet, dass**
die Rechnereinrichtung mittels Filtern mehrerer Abtastbilder die Genauigkeit von jeweiligen Positionsberechnungen erhöht.

2. Vorrichtung nach Anspruch 1, **dadurch gekennzeichnet, dass** die Laserabtasteinrichtung mindestens einen Sensor (1) aufweist, der in der Abtastebene mindestens ein Rad unter einem jeweiligen Blickwinkel für das Abtastbild erfasst.

3. Vorrichtung nach Anspruch 2, **dadurch gekennzeichnet, dass** der Sensor das mindestens eine Rad für das Abtastbild als zwei zueinander rechtwinkelig angeordnete Strecken erfasst.

4. Vorrichtung nach Anspruch 1, 2 oder 3, **dadurch gekennzeichnet, dass** die Rechnereinrichtung mittels zusätzlicher Daten eines Modells des jeweiligen Radfahrzeuges die jeweilige Position des mindestens einen Rades und/oder die Position einer Funktionsfläche des jeweiligen Radfahrzeuges berechnet.

5. Vorrichtung nach einem der vorhergehenden Ansprüche , **dadurch gekennzeichnet, dass** die Rechnereinrichtung mittels zusätzlicher allgemeiner Symmetriebedingungen von Radfahrzeugen, die jeweilige Position des jeweiligen Rades berechnet.

6. Vorrichtung nach einem der vorhergehenden Ansprüche, **dadurch gekennzeichnet, dass** die Rechnereinrichtung mittels zusätzlichen von Rädern unabhängigen Messpunkten des Abtastbildes eine jeweilige Position der Laserabtasteinrichtung zu einem Referenzkoordinatensystem berechnet.

7. Verwendung einer Vorrichtung nach einem der vorangehenden Ansprüche, **dadurch gekennzeichnet, dass** eine Positioniereinrichtung mittels der erfassten Positionen jeweiliger Räder des Radfahrzeuges das Radfahrzeug vollautomatisch oder eine Bedienperson unterstützend in eine Betriebsposition in dem Betriebsraum bringt.

8. Verwendung einer Vorrichtung nach Anspruch 7, **dadurch gekennzeichnet, dass** in der Betriebsposition sich eine Sekundärspule des Radfahrzeuges großflächig über eine Primärspule im Boden des Betriebsraums erstreckt.

9. Verwendung einer Vorrichtung nach Anspruch 7, **dadurch gekennzeichnet, dass** in der Betriebsposition sich eine Ladefläche des Radfahrzeuges unterhalb einer Hebeeinrichtung für Transportgüter erstreckt.

10. Verwendung einer Vorrichtung nach Anspruch 7, **dadurch gekennzeichnet, dass** in der Betriebsposition eine Transporteinrichtung das Radfahrzeug aufnimmt.

11. Verwendung einer Vorrichtung nach einem der vorangehenden Ansprüche, **dadurch gekennzeichnet, dass** eine Positioniereinrichtung mittels der erfassten Positionen aller Räder einer Vorderachse des Radfahrzeuges das Radfahrzeug vollautomatisch oder eine Bedienperson unterstützend in eine Betriebsposition in dem Betriebsraum bringt.

12. Verwendung einer Vorrichtung nach Anspruch 11, **dadurch gekennzeichnet, dass** in der Betriebsposition das Radfahrzeug mit einer Fördereinrichtung einer Waschstraße gekoppelt ist.

13. Verwendung einer Vorrichtung nach einem der vorangehenden Ansprüche, **dadurch gekennzeichnet, dass** eine Positioniereinrichtung mittels der erfassten Positionen aller Räder des in dem Betriebsraum abgestellten Radfahrzeuges eine Transporteinrichtung vollautomatisch oder eine Bedienperson unterstützend in eine Transportposition relativ zum Radfahrzeug in dem Betriebsraum bringt.

14. Verwendung einer Vorrichtung nach einem der vorangehenden Ansprüche, **dadurch gekennzeichnet, dass** die Laserabtasteinrichtung alle Räder des jeweiligen Radfahrzeuges erfasst.

15. Verfahren zur Positionsbestimmung von Radfahrzeugen (7), wobei dass eine Laserabtasteinrichtung in Relation zu einem Betriebsraum positioniert ist, in dem mindestens ein Radfahrzeug eingebracht wird, wobei die Laserabtasteinrichtung zweidimensional entlang einer zu einer ebenen Bodenfläche des Betriebsraums parallelen Abtastebene (8) in einer Höhe zwischen der Bodenfläche des Raums und einer jeweiligen Bodenfläche eines jeweiligen Radfahrzeuges mindestens ein Rad (5) des jeweiligen Radfahrzeuges in einem Abtastbild (9) erfasst und die Genauigkeit der Positionsbestimmung mit der Anzahl der erfassten Räder zunimmt, wobei eine Rechnereinrichtung mittels des Abtastbildes eine jeweilige Position des mindestens einen Rades in der Abtastebene berechnet, **dadurch gekennzeichnet, dass**
die Rechnereinrichtung mittels Filtern mehrerer Abtastbilder die Genauigkeit von jeweiligen Positionsberechnungen erhöht.

16. Verfahren nach Anspruch 15, **dadurch gekennzeichnet, dass** die Laserabtasteinrichtung mindestens einen Sensor (1) aufweist, der in der Abtastebene mindestens ein Rad unter einem jeweiligen Blickwinkel für das Abtastbild erfasst.

17. Verfahren nach Anspruch 16, **dadurch gekennzeichnet, dass** der Sensor das mindestens eine Rad für das Abtastbild als zwei zueinander rechtwinkelig angeordnete Strecken erfasst.

18. Verfahren nach einem der vorhergehenden Ansprüche 15 bis 17, **dadurch gekennzeichnet, dass** die Rechnereinrichtung mittels zusätzlicher Daten eines Modells des jeweiligen Radfahrzeuges die jeweilige Position des mindestens einen Rades und/oder die Position einer Funktionsfläche des jeweiligen Radfahrzeuges berechnet.

19. Verfahren nach einem der vorhergehenden Ansprüche 15 bis 18, **dadurch gekennzeichnet, dass** die Rechnereinrichtung mittels zusätzlicher allgemeiner Symmetriebedingungen von Radfahrzeugen, die jeweilige Position des jeweiligen Rades berechnet.

20. Verfahren nach einem der vorhergehenden Ansprüche 15 bis 19, **dadurch gekennzeichnet, dass** die Rechnereinrichtung mittels zusätzlichen von Rädern unabhängigen Messpunkten des Abtastbildes eine jeweilige Position der Laserabtasteinrichtung zu einem Referenzkoordinatensystem berechnet.

21. Verwendung eines Verfahrens nach einem der vorangehenden Ansprüche 15 bis 20, **dadurch gekennzeichnet, dass** eine Positioniereinrichtung mittels der erfassten Positionen jeweiliger Räder des Radfahrzeuges das Radfahrzeug vollautomatisch oder eine Bedienperson unterstützend in eine Betriebsposition in dem Betriebsraum bringt.

22. Verwendung eines Verfahrens nach Anspruch 21, **dadurch gekennzeichnet, dass** in der Betriebsposition sich eine Sekundärspule des Radfahrzeuges großflächig über eine Primärspule im Boden des Betriebsraums erstreckt.

23. Verwendung eines Verfahrens nach Anspruch 21, **dadurch gekennzeichnet, dass** in der Betriebsposition sich eine Ladefläche des Radfahrzeuges unterhalb einer Hebeeinrichtung für Transportgüter erstreckt.

24. Verwendung eines Verfahrens nach Anspruch 21, **dadurch gekennzeichnet, dass** in der Betriebsposition eine Transporteinrichtung das Radfahrzeug aufnimmt.

25. Verwendung eines Verfahrens nach einem der vorangehenden Ansprüche 15 bis 24, **dadurch gekennzeichnet, dass** eine Positioniereinrichtung mittels der erfassten Positionen aller Räder einer Vorderachse des Radfahrzeuges das Radfahrzeug vollautomatisch oder eine Bedienperson unterstützend in eine Betriebsposition in dem Betriebsraum bringt.

26. Verwendung eines Verfahrens nach Anspruch 25, **dadurch gekennzeichnet, dass** in der Betriebsposition das Radfahrzeug mit einer Fördereinrichtung einer Waschstraße gekoppelt ist.

27. Verwendung eines Verfahrens nach einem der vorangehenden Ansprüche 15 bis 26, **dadurch gekennzeichnet, dass** eine Positioniereinrichtung mittels der erfassten Positionen aller Räder des in dem Betriebsraum abgestellten Radfahrzeuges eine Transporteinrichtung vollautomatisch oder eine Bedienperson unterstützend in eine Transportposition relativ zum Radfahrzeug in dem Betriebsraum bringt.

28. Verwendung eines Verfahrens nach einem der vorangehenden Ansprüche 15 bis 27, **dadurch gekennzeichnet, dass** die Laserabtasteinrichtung alle Räder des jeweiligen Radfahrzeuges erfasst.

## Claims

1. Apparatus for determining the position of wheeled vehicles (7), a laser scanning device being positioned in relation to an operating space into which at least one wheeled vehicle is introduced, the laser scanning device detecting at least one wheel (5) of the respective wheeled vehicle in a scanning image (9) two dimensionally along a scanning plane (8) parallel to a level bottom surface of the operating space at a height between the bottom surface of the space and a respective bottom surface of a respective wheeled vehicle, and the accuracy of the position determination increasing with the number of wheels detected, a computer device calculating a respective position of the at least one wheel in the scanning plane by means of the scanning image, **characterized in that** the computer device increases the accuracy of respective position calculations by means of filtering a plurality of scanning images.

2. Apparatus according to Claim 1, **characterized in that** the laser scanning device has at least one sensor (1), which, in the scanning plane, detects at least one wheel for the scanning image at a respective viewing angle.

3. Apparatus according to Claim 2, **characterized in that** the sensor detects the at least one wheel for the scanning image as two distances arranged at right angles to each other.

4. Apparatus according to Claim 1, 2 or 3, **characterized in that** the computer device calculates the respective position of the at least one wheel and/or the position of a functional surface of the respective wheeled vehicle by means of additional data from a model of the respective wheeled vehicle.

5. Apparatus according to one of the preceding claims, **characterized in that** the computer device calculates the respective position of the respective wheel by means of additional general conditions of symmetry of wheeled vehicles.

6. Apparatus according to one of the preceding claims, **characterized in that** the computer device calculates a respective position of the laser scanning device in relation to a reference coordinate system by means of additional measuring points from the scanning image that are independent of wheels.

7. Use of an apparatus according to one of the preceding claims, **characterized in that**, by means of the detected positions of respective wheels of the wheeled vehicle, a positioning device brings the wheeled vehicle into an operating position in the operating space, fully automatically or with the assistance of an operator.

8. Use of an apparatus according to Claim 7, **characterized in that**, in the operating position, a secondary coil of the wheeled vehicle extends over a large area over a primary coil in the floor of the operating space.

9. Use of an apparatus according to Claim 7, **characterized in that**, in the operating position, a loading surface of the wheeled vehicle extends underneath a lifting device for goods to be transported.

10. Use of an apparatus according to Claim 7, **characterized in that**, in the operating position, a transport device picks up the wheeled vehicle.

11. Use of an apparatus according to one of the preceding claims, **characterized in that**, by means of the detected positions of all the wheels of a front axle of the wheeled vehicle, a positioning device brings the wheeled vehicle into an operating position in the operating space fully automatically or with the assistance of an operator.

12. Use of an apparatus according to Claim 11, **characterized in that**, in the operating position, the wheeled vehicle is coupled with a conveying device of a car wash.

13. Use of an apparatus according to one of the preceding claims, **characterized in that**, by means of the detected positions of all the wheels of the wheeled vehicle parked in the operating space, a positioning device brings a transport device into a transport position relative to the wheeled vehicle in the operating space, fully automatically or with the assistance of an operator.

14. Use of an apparatus according to one of the preceding claims, **characterized in that** the laser scanning device detects all the wheels of the respective wheeled vehicle.

15. Method for determining the position of wheeled vehicles (7), a laser scanning device being positioned in relation to an operating space into which at least one wheeled vehicle is introduced, the laser scanning device detecting at least one wheel (5) of the respective wheeled vehicle in a scanning image (9) two dimensionally along a scanning plane (8) parallel to a level bottom surface of the operating space at a height between the bottom surface of the space and a respective bottom surface of a respective wheeled vehicle, and the accuracy of the position determination increasing with the number of wheels detected, a computer device calculating a respective position of the at least one wheel in the scanning plane by means of the scanning image, **characterized in that** the computer device increases the accuracy of respective position calculations by means of filtering a plurality of scanning images.

16. Method according to Claim 15, **characterized in that** the laser scanning device has at least one sensor (1) which, in the scanning plane, detects at least one wheel for the scanning image at a respective viewing angle.

17. Method according to Claim 16, **characterized in that** the sensor detects the at least one wheel for the scanning image as two distances arranged at right angles to each other.

18. Method according to one of the preceding claims 15 to 17, **characterized in that** the computer device calculates the respective position of the at least one wheel and/or the position of a functional surface of the respective wheeled vehicle by means of additional data from a model of the respective wheeled vehicle.

19. Method according to one of the preceding claims 15 to 18, **characterized in that** the computer device calculates the respective position of the respective wheel by means of additional general conditions of symmetry of wheeled vehicles.

20. Method according to one of the preceding claims 15 to 19, **characterized in that** the computer device calculates a respective position of the laser scanning device in relation to a reference coordinate system by means of additional measuring points from the scanning image that are independent of wheels.

21. Use of a method according to one of the preceding claims 15 to 20, **characterized in that**, by means of the detected positions of respective wheels of the wheeled vehicle, a positioning device brings the wheeled vehicle into an operating position in the operating space, fully automatically or with the assistance of an operator.

22. Use of a method according to Claim 21, **characterized in that**, in the operating position, a secondary coil of the wheeled vehicle extends over a large area over a primary coil in the floor of the operating space.

23. Use of a method according to Claim 21, **characterized in that**, in the operating position, a loading surface of the wheeled vehicle extends underneath a lifting device for goods to be transported.

24. Use of a method according to Claim 21, **characterized in that**, in the operating position, a transport device picks up the wheeled vehicle.

25. Use of a method according to one of the preceding claims 15 to 24, **characterized in that**, by means of the detected positions of all the wheels of a front axle of the wheeled vehicle, a positioning device brings the wheeled vehicle into an operating position in the operating space fully automatically or with the assistance of an operator.

26. Use of a method according to Claim 25, **characterized in that**, in the operating position, the wheeled vehicle is coupled with a conveying device of a car wash.

27. Use of a method according to one of the preceding claims 15 to 26, **characterized in that**, by means of the detected positions of all the wheels of the wheeled vehicle parked in the operating space, a positioning device brings a transport device into a transport position relative to the wheeled vehicle in the operating space, fully automatically or with the assistance of an operator.

28. Use of a method according to one of the preceding claims 15 to 27, **characterized in that** the laser scanning device detects all the wheels of the respective wheeled vehicle.

## Revendications

1. Dispositif pour la détermination de la position de véhicules à roues (7), dans lequel une unité de balayage laser est positionnée par rapport à un espace d'exploitation dans lequel est introduit au moins un véhicule à roues, dans lequel l'unité de balayage laser, en deux dimensions le long d'un plan de balayage (8) parallèle à une surface inférieure plane de l'espace d'exploitation sur une hauteur comprise entre la surface inférieure de l'espace et une surface inférieure respective d'un véhicule à roues respectif, enregistre au moins une roue (5) du véhicule à roues respectif en une image de balayage (9), et accroît l'exactitude de la détermination de position avec le nombre des roues enregistrées, dans lequel une unité de calcul, au moyen de l'image de balayage, calcule une position respective de ladite au moins une roue dans le plan de balayage, **caractérisé en ce que**
l'unité de calcul, au moyen de filtres de plusieurs images de balayage, augmente l'exactitude des calculs de position respectifs.

2. Dispositif selon la revendication 1, **caractérisé en ce que** l'unité de balayage laser comprend au moins un capteur (1) qui, dans le plan de balayage, enregistre au moins une roue selon un angle de visée respectif pour l'image de balayage.

3. Dispositif selon la revendication 2, **caractérisé en ce que** le capteur enregistre ladite au moins une roue pour l'image de balayage selon deux lignes disposées perpendiculairement l'une à l'autre.

4. Dispositif selon la revendication 1, 2 ou 3, **caractérisé en ce que** l'unité de calcul, au moyen de données supplémentaires d'un modèle du véhicule à roues respectif, calcule la position respective de ladite au moins une roue et/ou la position d'une surface fonctionnelle du véhicule à roues respectif.

5. Dispositif selon l'une des revendications précédentes, **caractérisé en ce que** l'unité de calcul, au moyen de conditions de symétrie générales supplémentaires de véhicules à roues, calcule la position respective de la roue respective.

6. Dispositif selon l'une des revendications précédentes, **caractérisé en ce que** l'unité de calcul, au moyen de points de mesure supplémentaires de l'image de balayage indépendants des roues, calcule une position respective de l'unité de balayage laser dans un système de coordonnées de référence.

7. Utilisation d'un dispositif selon l'une des revendications précédentes, **caractérisée en ce qu'**une unité de positionnement, au moyen des positions enregistrées des roues respectives du véhicule à roues, amène le véhicule à roues dans une position d'exploitation dans l'espace d'exploitation, de manière complètement automatique ou avec l'assistance d'un opérateur.

8. Utilisation d'un dispositif selon la revendication 7, **caractérisée en ce que**, dans la position d'exploitation, une bobine secondaire du véhicule à roues s'étend sur une grande surface au-dessus d'une bobine primaire dans le sol de l'espace d'exploitation.

9. Utilisation d'un dispositif selon la revendication 7, **caractérisée en ce que**, dans la position d'exploitation, une surface de chargement du véhicule à roues s'étend au-dessous d'une unité de levage pour produits transportés.

10. Utilisation d'un dispositif selon la revendication 7, **caractérisée en ce que**, dans la position d'exploitation, une unité de transport reçoit le véhicule à roues.

11. Utilisation d'un dispositif selon l'une des revendications précédentes, **caractérisée en ce qu'**une unité de positionnement, au moyen des positions enregistrées de toutes les roues d'un essieu avant du véhicule à roues, amène le véhicule à roues dans une position d'exploitation dans l'espace d'exploitation, de manière complètement automatique ou avec l'assistance d'un opérateur.

12. Utilisation d'un dispositif selon la revendication 11, **caractérisée en ce que**, dans la position d'exploitation, le véhicule à roues est accouplé à une unité de transport d'une chaîne de lavage.

13. Utilisation d'un dispositif selon l'une des revendications précédentes, **caractérisée en ce qu'**une unité de positionnement, au moyen des positions enregistrées de toutes les roues du véhicule à roues stationnant dans l'espace d'exploitation, amène une unité de transport dans une position de transport par rapport au véhicule à roues dans l'espace d'exploitation, de manière complètement automatique ou avec l'assistance d'un opérateur.

14. Utilisation d'un dispositif selon l'une des revendications précédentes, **caractérisée en ce que** l'unité de balayage laser enregistre toutes les roues du véhicule à roues respectif.

15. Procédé pour la détermination de la position de véhicules à roues (7), dans lequel une unité de balayage laser est positionnée par rapport à un espace d'exploitation dans lequel est introduit au moins un véhicule à roues, dans lequel l'unité de balayage laser, en deux dimensions le long d'un plan de balayage (8) parallèle à une surface inférieure plane de l'espace d'exploitation sur une hauteur comprise entre la surface inférieure de l'espace et une surface inférieure respective d'un véhicule à roues respectif, enregistre au moins une roue (5) du véhicule à roues respectif en une image de balayage (9), et accroît l'exactitude de la détermination de position avec le nombre des roues enregistrées, dans lequel une unité de calcul, au moyen de l'image de balayage, calcule une position respective de ladite au moins une roue dans le plan de balayage, **caractérisé en ce que**
l'unité de calcul, au moyen de filtres de plusieurs images de balayage, augmente l'exactitude des calculs de position respectifs.

16. Procédé selon la revendication 15, **caractérisé en ce que** l'unité de balayage laser comprend au moins un capteur (1) qui, dans le plan de balayage, enregistre au moins une roue selon un angle de visée respectif pour l'image de balayage.

17. Procédé selon la revendication 16, **caractérisé en ce que** le capteur enregistre ladite au moins une roue pour l'image de balayage selon deux lignes disposées perpendiculairement l'une à l'autre.

18. Procédé selon l'une des revendications précédentes 15 à 17, **caractérisé en ce que** l'unité de calcul, au moyen de données supplémentaires d'un modèle du véhicule à roues respectif, calcule la position respective de ladite au moins une roue et/ou la position d'une surface fonctionnelle du véhicule à roues respectif.

19. Procédé selon l'une des revendications précédentes 15 à 18, **caractérisé en ce que** l'unité de calcul, au moyen de conditions de symétrie générales supplémentaires de véhicules à roues, calcule la position respective de la roue respective.

20. Procédé selon l'une des revendications précédentes 15 à 19, **caractérisé en ce que** l'unité de calcul, au moyen de points de mesure supplémentaires de l'image de balayage indépendants des roues, calcule une position respective de l'unité de balayage laser dans un système de coordonnées de référence.

21. Utilisation d'un procédé selon l'une des revendications précédentes 15 à 20, **caractérisée en ce qu'**une unité de positionnement, au moyen des positions enregistrées des roues respectives du véhicule à roues, amène le véhicule à roues dans une position d'exploitation dans l'espace d'exploitation, de manière complètement automatique ou avec l'assistance d'un opérateur.

22. Utilisation d'un procédé selon la revendication 21, **caractérisée en ce que**, dans la position d'exploitation, une bobine secondaire du véhicule à roues s'étend sur une grande surface au-dessus d'une bobine primaire dans le sol de l'espace d'exploitation.

23. Utilisation d'un procédé selon la revendication 21, **caractérisée en ce que**, dans la position d'exploitation, une surface de chargement du véhicule à roues s'étend au-dessous d'une unité de levage pour produits transportés.

24. Utilisation d'un procédé selon la revendication 21, **caractérisée en ce que**, dans la position d'exploitation, une unité de transport reçoit le véhicule à roues.

25. Utilisation d'un procédé selon l'une des revendications précédentes 15 à 24, **caractérisée en ce qu'**une unité de positionnement, au moyen des positions enregistrées de toutes les roues d'un essieu avant du véhicule à roues, amène le véhicule à roues dans une position d'exploitation dans l'espace d'exploitation, de manière complètement automatique ou avec l'assistance d'un opérateur.

26. Utilisation d'un procédé selon la revendication 25, **caractérisée en ce que**, dans la position d'exploitation, le véhicule à roues est accouplé à une unité de transport d'une chaîne de lavage.

27. Utilisation d'un procédé selon l'une des revendications précédentes 15 à 26, **caractérisée en ce qu'**une unité de positionnement, au moyen des positions enregistrées de toutes les roues du véhicule à roues stationnant dans l'espace d'exploitation, amène une unité de transport dans une position de transport par rapport au véhicule à roues dans l'espace d'exploitation, de manière complètement automatique ou avec l'assistance d'un opérateur.

28. Utilisation d'un procédé selon l'une des revendications précédentes 15 à 27, **caractérisée en ce que** l'unité de balayage laser enregistre toutes les roues du véhicule à roues respectif.
